# FASCICULE DE BREVET EUROPEEN

(11) **EP 1 316 534 B1**
(45) Date de publication et mention de la délivrance du brevet: **22.03.2006**
(21) Numéro de dépôt: 02366008.7
(22) Date de dépôt: 25.10.2002
(51) Int. Cl.: C02F 11/02, C05F 7/00

(54) **Procédé de compostage d'une boue liquide comportant une filtration séquentielle sur substrat carbonné et installation de mise en oeuvre de ce procédé**
Kompostierungsverfahren von Schlamm durch sequentielle Filtration mittels eines kohlenstoffhaltigen Trägers und Anlage zur Durchführung dieses Verfahrens
Method for composting a slurry by sequential filtration with a carbonaceous substrate and installation thereof

(30) Priorité: 30.11.2001 FR 0115572
(43) Date de publication de la demande: 04.06.2003
(73) Titulaire: Traitement Valorisation Decontamination, 54180 Heillecourt (FR)
(72) Inventeur: Chemin, Jean-Louis, 94230 Cachan (FR); Payet, Cécile, 9310 Meldert Aalst (BE); Renat, Jean-Christophe, 54000 Nancy (FR)
(74) Mandataire: Poupon, Michel

(56) Documents cités:
- GB-A- 1 498 938
- GB-A- 1 512 566
- US-A- 2 861 877
- US-A- 4 579 664
- DATABASE WPI Section Ch, Week 199620 Derwent Publications Ltd., London, GB; Class D15, AN 1996-199049 XP002208206 & KR 9 407 018 B (KOREA INST SCI & TECHNOLOGY), 3 août 1994 (1994-08-03)

## Description

L'invention concerne un nouveau procédé pour le compostage des boues liquides de sortie de stations d'épuration et une installation de mise en oeuvre du procédé.

De façon dassique les boues liquides de ce type subissent une déshydratation mécanique avant compostage.

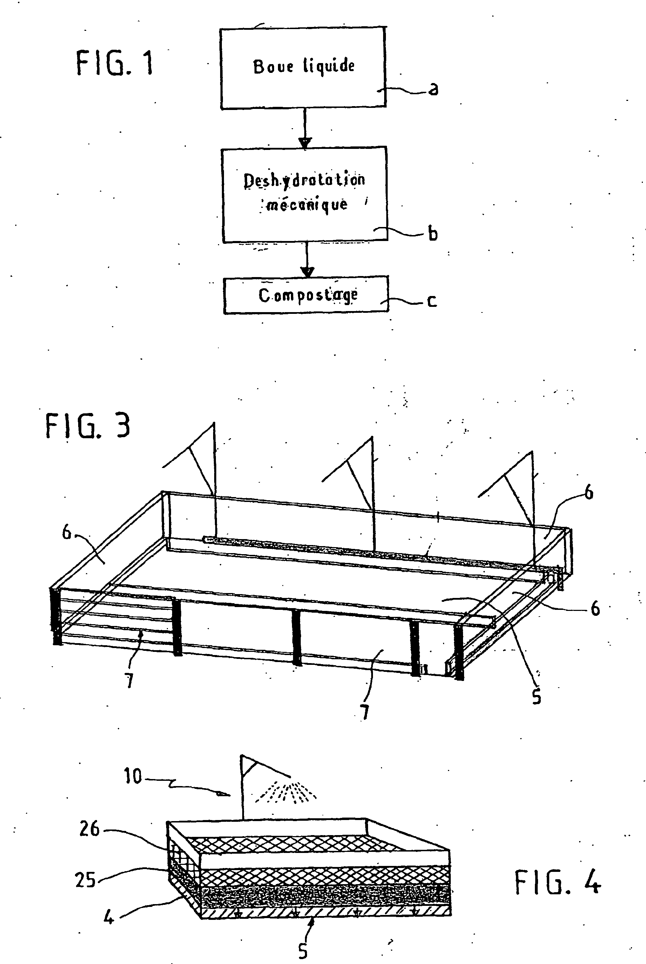

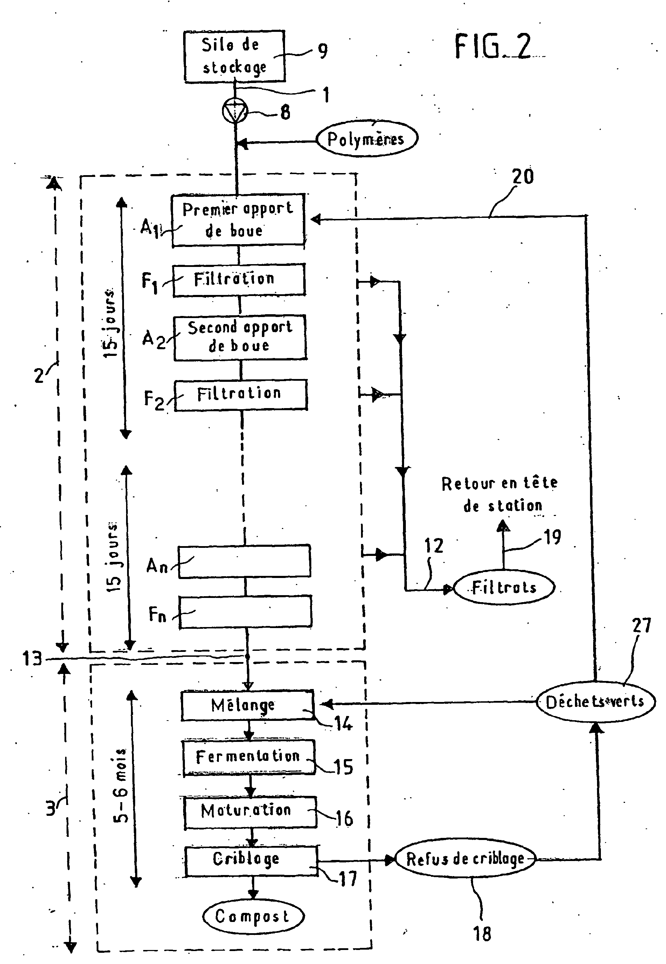

A titre d'exemple, la figure 1 illustre un procédé de l'art antérieur selon lequel une boue liquide (a) de siccité comprise 2 et 3 % subit d'abord une déshydratation mécanique (b) pour obtenir une boue de siccité intermédiaire de l'ordre de 15 à 40 % sur lesquelles on opère le compostage (c).

Les installations de mise en oeuvre de ces procédés sont complexes et onéreuses. En raison de leur coût, elles ne sont pas mises en oeuvre sur les stations d'épuration de petite taille ni sur les sites de pollution accidentelle.

Un objectif de l'invention est de s'affranchir de cette étape (b) de déshydratation mécanique et de diminuer les coûts d'installation afin de convenir aux stations de petite taille et aux sites pollués.

L'art antérieur cite les documents D1 : US-A-2,861,877 et D2 : GB-4-1 512 566. Le document D2 décrit un procédé qui nécessite une aération forcée, et dont le but est d'obtenir le minimum de filtrat tout en absorbant un maximum de boue par le matériau végétal.

Le document D1 décrit un procédé basé sur une alimentation en boue d'un lit végétal avec, pour principal mécanisme, l'absorption des boues par le lit et leur séchage par évaporation, dans des climats ensoleillès. Les boues sont apportées tout les cinq jours pendant environ un mois et à cette même fréquence, l'ensemble est mélangé et broyé sur place avec un motoculteur.

L'invention pallie les inconvénients de l'art antérieur en proposant un procédé pour le traitement de boues liquides comportant des étapes de compostage caractérisé en ce qu'il traite des boues liquides de siccité < à 8 % sortant d'un silo de stockage de stations d'épuration et en ce qu'il comporte :
- une adjonction de floculant dans les boues sortant du silo de stockage,
- une étape de filtration séquentielle constituée par une alternance (A₁, F₁...An, Fn )de (1 à n) étapes d'alimentation (A₁...An) des boues en provenance du silo et de (1 à n) étapes de filtration gravitaire (F₁...Fn) à travers un substrat carboné, l'ensemble des étapes de filtration séquentielle étant réalisé en l'absence de système d'aération, l'alimentation en boue étant réalisée par un arrosage de l'ensemble et au terme d'une séquence de filtration séquentielle deux phases étant obtenues à savoir :
   - une phase solide constituée par la boue déshydratée ayant filtré, et le substrat carboné,
   - une phase liquide constituée par les filtrats ayant percolé au travers du substrat carboné,
   - Une récupération des filtrats en vue de leur traitement,
   - Un ensemble d'étapes de compostage.

L'invention porte également sur une installation pour la transformation de boues liquides de siccité < à 8 % sortant d'un silo de stockage de station d'épuration, caractérisée en ce qu'elle est apte à réaliser un procédé selon rune des revendications 1 à 6 et en ce qu'elle comporte une aire où s'effectue la filtration séquentielle, une pompe en sortie de silo de stockage et, un tuyau d'amenée pour amener la boue liquide communiquant avec un ou plusieurs portiques d'arrosage aptes à maintenir chacun une rampe d'arrosage au-dessus de l'aire de filtration, de façon à répartir la boue sur l'ensemble de la surface et caractérisée en ce qu'elle comporte, en outre, une injection de floculant dans le tuyau d'amenée et avant les portiques d'arrosage.

On comprendra mieux l'invention à l'aide de la description ci-après d'un mode de réalisation de l'invention fait en référence aux figures ci-après.
- figure 1 : organigramme d'un procédé de l'art antérieur,
- figure 2 : organigramme d'un procédé selon l'invention,
- figure 3 : schéma de principe d'une aire de filtration pour la mise en oeuvre du procédé de la figure 2,
- figure 4 : schéma d'une aire de filtration selon la figure 3, montrant les différentes couches de matières qu'elle peut contenir en cours de traitement

On se rapporte d'abord à la figure 2 montrant les différentes étapes d'un procédé selon l'invention qui est destinée au traitement des boues liquides urbaines issues de station d'épuration.

En sortie d'un silo de stockage, les boues liquides à traiter (1) présentent une siccité de 2 à 8 % MS environ,

Préalablement à l'ensemble des étapes de compostage (3) connu en soi, on traite lesdites boues (1) par filtration séquentielle (2) sur un substrat carboné (4).

Pour l'exemple représenté en figures 3 et 4 ce substrat carboné est constitué d'un lit de déchets verts.

Par filtration séquentielle (2) on désigne une alternance de 1 à n étapes de filtration gravitaire (F₁, F₂... Fn) à travers le substrat carboné (A₁, F₁, A₂, F₂...An, Fn), et de 1 à n étapes d'arrosage (A₁, A₂... An) dudit substrat par les boues à traiter issues du silo de stockage.

Une séquence est achevée lorsque la siccité de la boue filtrée (13) atteint le niveau souhaité de siccité compris entre 10 et 13 %.

Lors d'une séquence, l'alimentation en boue de l'aire de filtration se fait en deux ou trois fois sur environ 15 jours.

La dernière alimentation (Aₙ) de l'aire de filtration par de la boue est suivie d'une phase de filtration gravitaire (Fn) sans aucun apport de boue d'une durée comprise entre 10 à 15 jours.

La durée totale d'une séquence de filtration est donc d'environ 30 jours pour cet exemple de la figure 2.

Cette filtration séquentielle (2) s'effectue sur une aire bétonnée (5) entourée de murs (6) (sur trois côtés) et d'un batardeau (7) de 60 à 90 cm de hauteur. Le substrat carboné (4) de filtration constitué par des déchets verts broyés présente une épaisseur de 10 à 20 cm (figues 3 et 4). La boue est pompée par une pompe (8) en sortie du silo (9) vers l'aire bétonnée (5) et est répartie sur l'ensemble de sa surface grâce à un ensemble de portiques (10).

Lesdits portiques (10) sont de préférence amovibles pour permettre la circulation des engins lors de la phase d'enlèvement des boues après filtration.

La hauteur moyenne cumulée de boue apportée varie de 100 à 120 cm. Une hauteur totale supérieure à 150 cm rendrait difficile l'enlèvement des boues filtrées.

L'apport de boue est réalisé quant à lui par un tuyau d'amenée longeant l'un des murs longitudinaux (6) communiquant avec un ou plusieurs portiques tels que (10) par exemple, aptes à maintenir chacun une rampe d'arrosage au-dessus de l'aire de filtration.

La figure 4 montre le contenu de l'aire de filtration au cours d'une séquence avec au fond une couche de déchets verts (4) surmontée d'une couche (25) de boues déshydratées puis d'une couche (26) de boues en cours de filtration.

Au terme d'une séquence de filtration, deux phases sont obtenues :
- une phase solide constituée par la boue ayant filtré et le substrat carboné, ici des déchets verts broyés. La boue filtrée est déshydratée, et pâteuse fluide.
- une phase liquide constituée par les filtrats (12) ayant percolé au travers des déchets verts, ces filtrats présentant des teneurs en matière sèche de 0.2 à 0.8 %. Ils sont collectés par des caniveaux et renvoyés en tête de station par le retour (19). Une pente de 1 à 2 % de l'aire de filtration et du système de caniveaux permet d'améliorer la collecte des filtrats.

Après une séquence de filtration les couches (25) de boue déshydratée et de déchets verts (4) sont reprises par des engins, mélangées à un supplément de déchets verts selon un ratio classique de compostage de boue d'épuration pâteuse. On réalise ensuite un ensemble d'étapes (3) de compostage classique à savoir mélange (14) fermentation (15) maturation (16), criblage (17).

Le compost ou produit final (18) a une siccité supérieure à 40 % MS.

On peut prévoir de réintroduire des refus de criblage (18), dans la réserve de déchets verts (27) pour réinjections éventuelles dans l'aire bétonnée par la boucle (20) ou dans l'étape de mélange (14) du compostage (3).

A titre indicatif on donne pour l'exemple qui vient d'être décrit les valeurs suivantes :

| | **Siccite en M.S.** | **V = fraction du volume d'eau initial apportée par les boues liquides.** |
|---|---|---|
| boue avant filtration | 2 - 8 % | 100 % |
| boue en fin de filtration | 10 - 13 % | 20 - 30 % |
| filtrats 12 | 0,2 - 0, 8 % | 70 - 80 % |
| compost | > 40 % | |

Des variantes sont possibles au niveau du procédé par exemple :
- **Sur la qualité des boues**
   Les boues liquides traitées présentent une siccité initiale maximale de 8 %.
- **Sur la nature du support de filtration**
   Le support de filtration peut être constitué d'un autre substrat carboné tels que les écorces, paille, sciure, rafles de maïs ou mélange de ces produits, ou de tous autres produits organiques carbonés.
- **Sur la durée d'une séquence de filtration**
   En fonction du volume de boue à traiter, il pourra être décidé de prolonger la séquence de filtration jusqu'à 6 mois, les ratios étant par ailleurs identiques à ceux donnés dans le mode de réalisation.
   S'il est nécessaire de traiter les boues rapidement, il est également possible de réduire la durée de filtration des boues à une quinzaine de jours en augmentant l'apport de floculant.
- **Sur le taux de polymères**
   En fonction du degré d'épaississement des boues liquides traitées et de la durée souhaitée d'une séquence de filtration, la dose de polymères est variable et reste dans les gammes classiques couramment utilisées pour le conditionnement des boues liquides avant déshydratation mécanique.
   Le polymère peut être injecté dans le tuyau d'amenée et avant les portiques (10). Une augmentation de la dose de floculant va surtout accélérer la vitesse de filtration.

On peut également prévoir des traitements supplémentaires optionnels tels que par exemple :
- **Un traitement anti-odeur**
   Un traitement anti-odeur peut être appliqué de préférence en amont de la filtration si les boues traitées produisent des nuisances olfactives.
- **Unité mobile**
   On peut également prévoir de réaliser le procédé dans une unité mobile, par exemple pour pouvoir agir en cas de pollution accidentelle, et/ou sur des petits volumes de boues et/ou en cas d'insuffisance de place disponible.
   L'aire bétonnée de filtration décrite est alors remplacée par une phase de filtration mobile réalisée par exemple dans une benne de filtration. Le dispositif mobile doit permettre l'apport séquentiel de boue et la collecte des filtrats.

Dans tous les cas, le matériau est déposé sur une plateforme et la surface du matériau est arrosée par des rampes d'arrosage répartissant ainsi le plus régulièrement possible l'apport de boue sur ladite surface rendant inutile tout système d'aération du massif filtrant, par ailleurs le procédé selon l'invention ne requière ni séchage ni broyage in situ et le retour des percolats se rait en tête de station.

Parmi les avantages du procédé et des installations de mises en oeuvre on cite non limitativement :
- traitement possible des boues en sortie des stations d'épuration de petites tailles,
- coût plus faible que dans l'art antérieur,
- diminution des besoins en stockage de boues liquides et limitation des risques financiers en cas de pollution,
- diversification des débouchés au niveau du produit final puisqu'il est sec et permet diverses utilisations ou présentations,
- valorisation des déchets verts.

## Revendications

1. Procédé pour le traitement de boues liquides comportant des étapes de compostage **caractérisé en ce qu'**il traite des boues liquides de siccité < à 8 % sortant d'un silo de stockage de stations d'épuration et **en ce qu'**il comporte :
- une adjonction de floculant dans les boues sortant du silo de stockage,
- une étape de filtration séquentielle constituée par une alternance (A₁, F₁...An, Fn) de (1 à n) étapes d'alimentation (A₁...An) des boues en provenance du silo et de (1 à n) étapes de filtration gravitaire (F₁...Fn) à travers un substrat carboné (4), l'ensemble des étapes de filtration séquentielle étant réalisé en l'absence de système d'aération, l'alimentation en boue étant réalisée par un arrosage de l'ensemble et au terme d'une séquence de filtration séquentielle deux phases étant obtenues à savoir une phase solide constituée par la boue déshydratée ayant filtré, et le substrat carboné et une phase liquide constituée par les filtrats (12) ayant percolé au travers du substrat carboné,
- une récupération et un retour (19) des filtrats en tête de station,
- un ensemble (3) d'étapes de compostage.

2. Procédé selon la revendication 1, **caractérisé en ce que** les filtrats sont collectés par des caniveaux et renvoyés en tête de station par un retour (19).

3. Procédé selon l'une des revendications 1 à 2, **caractérisé en ce que**, après environ un mois de filtration, les filtrats représentent plus de 70 % de l'eau des boues et les boues ont une siccité supérieure à 11 %.

4. Procédé selon l'une des revendications 1 à 3, **caractérisé en ce qu'**il comporte un traitement anti odeur.

5. Procédé selon l'une des revendications 1 à 4, **caractérisé en ce que** le substrat carboné est constitué de déchets verts.

6. Installation pour la transformation de boues liquides de siccité < à 8 % sortant d'un silo de stockage de station d'épuration, **caractérisée en ce qu'**elle est apte à réaliser un procédé selon l'une des revendications 1 à 5 et **en ce qu'**elle comporte une aire (5) où s'effectue la filtration séquentielle (1), une pompe (8) en sortie de silo de stockage et, un tuyau d'amenée (24) pour amener la boue liquide communiquant avec un ou plusieurs portiques d'arrosage (10) aptes à maintenir chacun une rampe d'arrosage au-dessus de l'aire de filtration, de façon à répartir la boue sur l'ensemble de la surface et **caractérisée en ce qu'**elle comporte, en outre, une injection de floculant dans le tuyau d'amenée (24) et avant les portiques d'arrosage (10).

7. Installation selon la revendication 6, **caractérisée en ce qu'**elle comporte des caniveaux de collecte des filtrats.

8. Installation selon la revendication 7, **caractérisé en ce que** la pente des caniveaux est de l'ordre de 1 à 2 %.

9. Installation selon la revendication 6, **caractérisé en ce que** l'installation est une unité mobile.

10. Installation selon la revendication 6, **caractérisée en ce que** les portiques sont amovibles.

## Patentansprüche

1. Verfahren zur Behandlung von flüssigen Schlämmen, umfassend Schritte des Kompostierens, **dadurch gekennzeichnet, dass** es flüssige Schlämme mit einer Trockenheit von < 8% behandelt, die aus einem Lagersilo von Aufbereitungsanlagen austreten, und dass es umfasst:
- eine Beigabe eines Flockungsmittels zu den aus dem Lagersilo austretenden Schlämmen,
- einen Schritt der sequentiellen Filterung, bestehend aus einer Wechselfolge (A1, F1.... An, Fn) von (1 bis n) Schritten (A1 ... An) der Zuführung der von dem Silo stammenden Schlämme und von (1 bis n) Filterschritten durch Schwerkraft (F₁.... Fₙ) durch ein kohlenstoffhaltiges Substrat (4), wobei die Gesamtheit der Schritte der sequentiellen Filterung ohne ein Belüftungssystem durchgeführt wird, wobei die Schlammzuführung durch ein Besprengen der Einheit durchgeführt wird und nach zwei sequentiellen Filtersequenzen zwei Phasen erhalten werden, nämlich eine feste Phase, die von dem entwässerten gefilterten Schlamm und dem kohlenstoffhaltigen Substrat gebildet ist, und eine flüssige Phase, die von den Filtraten (12) gebildet ist, die durch das kohlenstoffhaltige Substrat gefiltert wurden,
- eine Wiedergewinnung und Rückführung (19) der Filtrate an den Beginn der Anlage,
- eine Gesamtheit (3) von Kompostierungsschritten.

2. Verfahren nach Anspruch 1, **dadurch gekennzeichnet, dass** die Filtrate durch Kanäle gesammelt und an den Beginn der Anlage durch eine Rückführung (19) zurückgeführt werden.

3. Verfahren nach einem der Ansprüche 1 bis 2, **dadurch gekennzeichnet, dass** nach ungefähr einem Monat des Filterns die Filtrate mehr als 70 % des Wassers der Schlämme ausmachen und die Schlämme eine Trockenheit von mehr als 11 % aufweisen.

4. Verfahren nach einem der Ansprüche 1 bis 3, **dadurch gekennzeichnet, dass** es eine geruchshemmende Behandlung umfasst.

5. Verfahren nach einem der Ansprüche 1 bis 4, **dadurch gekennzeichnet, dass** das kohlenstoffhaltige Substrat von Grünabfällen gebildet ist.

6. Anlage zur Umwandlung von flüssigen Schlämmen mit einer Trockenheit < 8 %, die aus einem Lagersilo einer Aufbereitungsanlage kommen, **dadurch gekennzeichnet, dass** sie ein Verfahren nach einem der Ansprüche 1 bis 6 durchführen kann und dass sie einen Bereich (5), in dem die sequentielle Filterung (1) stattfindet, eine Pumpe (8) am Ausgang des Lagersilos und ein Zuführrohr (24) umfasst, um den flüssigen Schlamm zuzuführen, der mit einer oder mehreren Besprengungsbrücken (10) in Verbindung steht, die jeweils eine Besprengungsrampe über dem Filterbereich halten können, um den Schlamm auf der gesamten Oberfläche zu verteilen, und **dadurch gekennzeichnet, dass** sie ferner eine Einspritzung eines Flockungsmittels in das Zuführrohr (24) und vor den Besprengungstüren (10) umfasst.

7. Anlage nach Anspruch 6, **dadurch gekennzeichnet, dass** sie Sammelkanäle für die Filtrate umfasst.

8. Anlage nach Anspruch 7, **dadurch gekennzeichnet, dass** das Gefälle der Kanäle ungefähr 1 bis 2 % beträgt.

9. Anlage nach Anspruch 6, **dadurch gekennzeichnet, dass** die Anlage eine bewegliche Einheit ist.

10. Anlage nach Anspruch 6, **dadurch gekennzeichnet, dass** die Türen abnehmbar sind.

## Claims

1. Method for the treatment of liquid sludges, said method comprising composting steps, **characterised in that** it treats liquid sludges which have a siccity < 8 % and emerge from a storage silo of sewage stations, and **in that** it includes:
- an addition of flocculent to the sludges emerging from the storage silo;
- a step of sequential filtration made up by a graduation (A₁, F₁...An, Fn) of (1 to n) steps of supplying (A₁...Aₙ) sludges coming from the silo and (1 to n) steps of gravitational filtration (F₁...Fn) through a carbonaceous substrate (4), all of the steps of sequential filtration being carried out in the absence of an aeration system, the supply of sludge being carried out by sprinkler the assembly and, at the end of a sequence of sequential filtration, two phases being obtained, namely a solid phase made up by the dehydrated sludge, which has been filtered, and the carbonaceous substrate, and a liquid phase, made up by the filtrates (12), having percolated through the carbonaceous substrate,
- a collection and a return (13) of the filtrates at the station head; and
- an assembly (3) of composting steps.

2. Method according to claim 1, **characterised in that** the filtrates are collected by channels and sent back to the station head by a return means (19).

3. Method according to one of claims 1 to 2, **characterised in that**, after about a month of filtration, the filtrates represent more than 70 % of the water from the sludges, and the sludges have a siccity greater than 11 %.

4. Method according to one of claims 1 to 3, **characterised in that** it includes an anti-odour treatment.

5. Method according to one of claims 1 to 4, **characterised in that** the carbonaceous substrate is made up of green waste.

6. Installation for the transformation of liquid sludges, which have a siccity < 8 % and emerge from a storage silo of a sewage station, **characterised in that** it is capable of carrying out a method according to one of claims 1 to 5, and **in that** it includes an area (5) where the sequential filtration (1) is carried out, a pump (8) at the outlet of the storage silo, and a supply pipe (24) to supply the liquid sludge, said supply pipe communicating with one or more sprinkler frames (10) each capable of retaining a sprinkler bar above the filtration area, so as to distribute the sludge over the whole of the surface, and **characterised in that** it includes, in addition, an injection of flocculent into the supply pipe (24) and upstream of the sprinkler frames (10).

7. Installation according to claim 6, **characterised in that** it includes channels for collecting the filtrates.

8. Installation according to claim 7, **characterised in that** the incline of the channels is in the order of 1 to 2 %.

9. Installation according to claim 6, **characterised in that** the installation is a displaceable unit.

10. Installation according to claim 6, **characterised in that** the frames are detachable.
